# EUROPEAN PATENT APPLICATION

(11) **EP 2 881 195 A1**
(43) Date of publication of application: **10.06.2015**
(21) Application number: 13382489.6
(22) Date of filing: 03.12.2013
(51) Int. Cl.: B22C 5/04, B22C 9/10, B22C 9/12

(54) **Installation for hardening molding cores**

(71) Applicant: Loramendi, S.COOP., 01010 Vitoria-Gasteiz (ES)
(72) Inventor: Miguel Perez, Iñaki, 01010 VITORIA - GASTEIZ (ES); Guenetxea Sasiain, Eneka, 20810 ORIO (ES); Barrasa Artamendi, Ekaitz, 01006 VITORIA-GASTEIZ (ES); Olea Abarrategi, Alesander, 48140 IGORRE (ES)
(74) Representative: Igartua, Ismael

(57) **Abstract**

Installation for hardening molding cores of a mass containing sand, wherein the core is subjected to at least one gas stream enriched with a catalyst for hardening it. The installation comprises a molding tool (1) where the core is subjected to the gas stream, a tank (2) where the catalyst is stored, a conduit (3) between the tank (2) and the molding tool (1) through which the catalyst flows towards said molding tool (1), means for controlling the amount of catalyst that is delivered to the molding tool and a temperature regulator (6) suitable for controlling the temperature of the catalyst that is delivered to the molding tool.

## Description

### TECHNICAL FIELD

The present invention is related to installations for hardening molding cores of a mass containing sand, wherein the core is subjected to a gas stream enriched with a catalyst for hardening it in a molding tool.

### PRIOR ART

Installations for hardening molding cores comprise a molding tool where the core is hardened by means of a catalyst, a tank where the catalyst is stored, a conduit between the tank and the molding tool through which the catalyst flows from said tank to said molding tool, an actuator (a pump) for pumping the catalyst from the tank to the molding tool and means for controlling the amount of catalyst that is delivered to the molding tool. The catalyst can be a type of amine, for example, and is usually stored in liquid form in the tank.

Document GB 2296760 A discloses the manufacture of sand molds where a heated catalyst is used for hardening the mold. A heater is used to control the heating of the catalyst, said heater comprising a chamber with an inlet for receiving the catalyst, an outlet for discharging it, a heater element in the chamber emitting heat for heating the catalyst and control means for varying the heat emitted by the heater for the purpose of maintaining the temperature of the catalyst within a predetermined range.

### DISCLOSURE OF THE INVENTION

The object of the invention is to provide an installation for hardening molding cores as described in the claims.

The installation of the invention is suitable for hardening molding cores of a mass containing sand, wherein the core is subjected to at least one stream of catalyst for its hardening. The installation comprises a molding tool where the core is subjected to the stream of catalyst, a tank where the catalyst is stored before being carried to the molding tool or an inlet through which the catalyst is supplied from the outside, a conduit between the tank (or the inlet) and the molding tool through which the catalyst flows from said tank (or said inlet) to said molding tool, an actuator for pumping the catalyst from the tank (or the inlet) to the molding tool, and means for controlling the amount of catalyst that is delivered to the molding tool.

The installation further comprises a temperature regulator which is associated with or coupled to a regulation section of the conduit and which is suitable for controlling the temperature of the catalyst that is delivered to the molding tool. As a result of the temperature control, a precise control over the properties of the catalyst (particularly the density and/or the state or phase thereof) is achieved, which allows assuring a correct and precise supply thereof in addition to maintaining the catalyst in safe conditions (below its boiling temperature, for example, for the case of potentially hazardous catalysts with respect to this point). This is achieved in a manner that does not significantly complicate the assembly of the installation and that even allows obtaining a more compact installation.

Furthermore, said temperature regulator can be easily coupled in a conventional installation without the need to perform great modifications, an installation according to the invention being able to be obtained in a simple and economical manner with all the advantages that it entails.

These and other advantages and features of the invention will become evident in view of the drawings and the detailed description of the invention.

### DESCRIPTION OF THE DRAWINGS

Figure 1 schematically shows a preferred embodiment of the installation of the invention.
Figure 2 shows by way of example a thermoelectric module which is used as a temperature regulator in the installation of Figure 1.
Figure 3 shows an electrical connection of two different materials in the form of dies, of a thermoelectric module such as that of Figure 2, for example.
Figure 4 shows the thermoelectric module of Figure 2, where the flow of an electric current therethrough is furthermore shown.
Figure 5 shows in detail the association between a regulation section of a conduit and the temperature regulator of the installation of Figure 1.

### DETAILED DISCLOSURE OF THE INVENTION

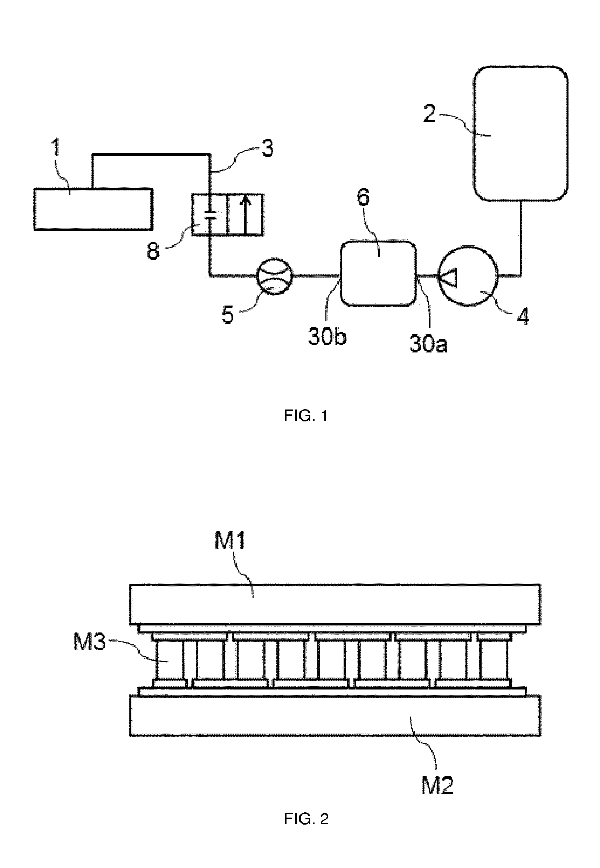

Figure 1 schematically shows a preferred embodiment of the installation of the invention. The installation is designed for hardening molding cores of the type manufactured with a mass containing sand. The cores are hardened in the installation by subjecting them to the action of a catalyst which preferably corresponds with a type of amine.

The installation comprises a molding tool 1 (or gassing plate) where the core to be hardened is arranged, and the catalyst is introduced in the molding tool 1 for hardening said core. The installation further comprises a tank 2 where the catalyst that will be used for hardening the core is stored, a conduit 3 communicating the tank 2 with the molding tool 1 and through which the catalyst flows from said tank 2 to said molding tool 1, an actuator 4 for bringing the catalyst to the molding tool 1 from the tank 2, which preferably corresponds with a pump, and means for controlling the amount of catalyst that is delivered to the molding tool 1 for hardening a core.

Although it has been mentioned that the installation comprises a tank 2 where the catalyst is stored, it also would be possible for the installation to receive the catalyst from an external source. In the case of comprising a tank 2, the catalyst is stored therein in a liquid state, and is thus transported towards the molding tool 1. Once the amount that is delivered to the molding tool 1 is known, the catalyst goes through a gasifier (not depicted in the drawings) where it is converted into gaseous state, it being introduced in the molding tool in gaseous state.

The installation further comprises a temperature regulator 6 which is associated with or coupled to a regulation section 30 of the conduit 3, the regulation section 30 comprising an inlet 30a and an outlet 30b for the catalyst. The temperature regulator 6 acts on the regulation section 30 with which it is associated or to which it is coupled for controlling the temperature of the catalyst at the outlet of the regulation section 30, without contacting same, such that the properties of the catalyst (particularly the density and/or the state or phase thereof) are kept under control and an exhaustive and secure control of the amount of catalyst which is used is achieved without the additional need of contacting the catalyst which in some circumstances can be dangerous and which furthermore makes substantially modifying the design of a conventional installation compulsory, whereby the amount of catalyst to be consumed can be optimized without compromising the quality of the hardening of the core or involving an excessive additional cost. Furthermore, the knowledge on and the control over said properties of the catalyst allow having a constant factor of repeatability in the catalyst supplying process since the amount of catalyst being delivered is easily known at all times.

The temperature regulator 6 is associated with or coupled to the outside of the regulation section 30 of the conduit 3, said temperature regulator 6 acting on the catalyst from the outside of the conduit 3 without contacting said catalyst at all, as mentioned.

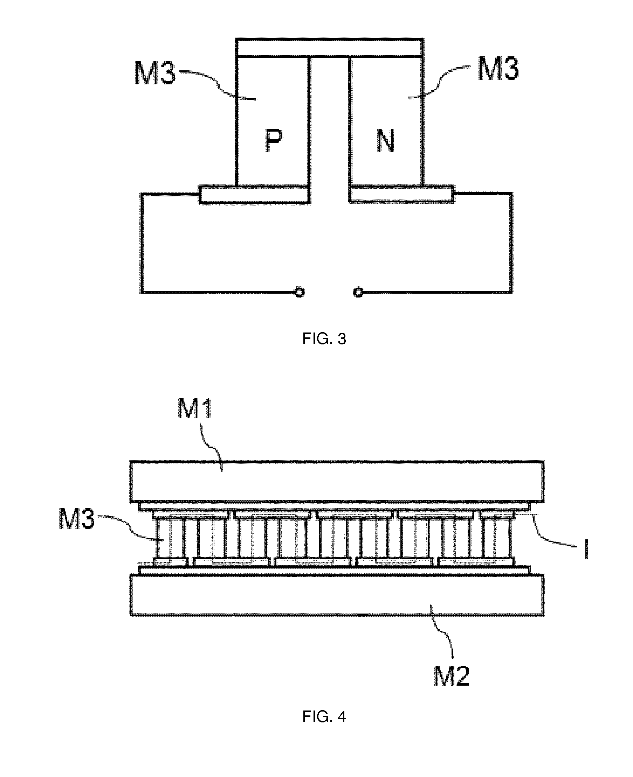

The temperature regulator 6 is electrically controlled, such that it regulates the temperature of the catalyst by means of electric energy. In the preferred embodiment, the temperature regulator 6 corresponds with a thermoelectric module. A thermoelectric module comprises two substrates M1 and M2 and a plurality of elements made of different materials such as metals or P-type and N-type semiconductors, for example, preferably in the form of dies M3, arranged between both substrates M1 and M2, as shown in Figure 2. The thermoelectric module uses the Peltier effect to create a heat flow between the two substrates M1 and M2 through an electrical connection of the dies M3 such as that shown by way of example in Figure 3. Figure 4 shows by way of example a structure of the thermoelectric module with the flow of an electric current I which is responsible for generating the heat flow. Depending on the direction of the current I, the heat flow occurs in one direction or another between both substrates M1 and M2. The use of a thermoelectric module as a temperature regulator 6 allows said temperature regulator to comply with the ATEX (Explosive Atmosphere) Directive required in the installations present in explosive environments. The ATEX Directive describes the type of equipment and environment that is allowed for working in an explosive atmosphere, and at least some of the catalysts commonly used are highly explosive products, as is the case of amine for example, so it is necessary to comply with the ATEX Directive when using same in order to protect workers from the risks of explosion. In these cases, the contact of an electric energy-operated temperature regulator with the catalyst can be particularly dangerous, and the invention prevents this risk by using a temperature regulator 6 that does not need a direct contact with said catalyst for controlling its temperature. Furthermore, the temperature regulator 6 has the capacity for cooling the catalyst, so said catalyst can be prevented and assured from reaching temperatures in which it may explode.

In the preferred embodiment, the thermoelectric module is formed by a first substrate 61 and a second substrate 62 that are facing one another, exposed to different temperatures, and have between them a plurality of dies 63 electrically connected in series to one another. Each die 63 is connected on one side to the first substrate 61 and on the other side to the second substrate 62, preferably by welding. The substrate which is exposed to a higher temperature is usually the first substrate 61, and the aim is to cool down said substrate by applying to the thermoelectric module the necessary electric current and with the necessary direction (current circulating through the dies 63).

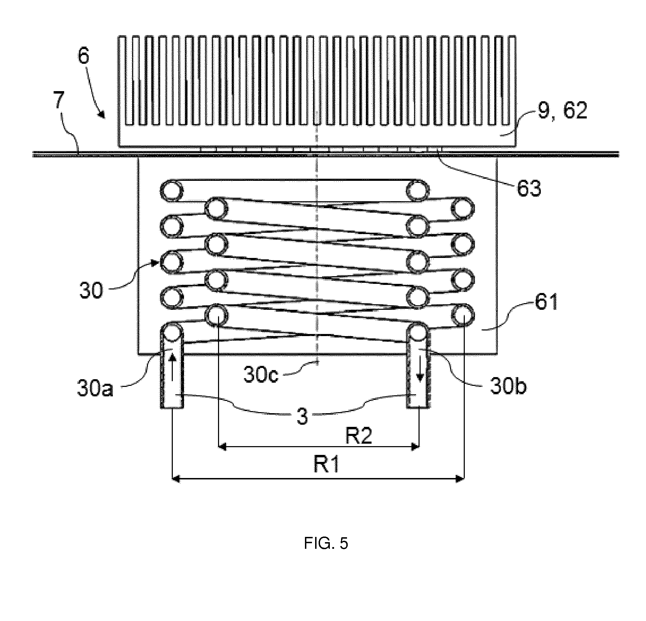

The heat transfer occurs when an electric current is circulated through the dies 63. The direction of the heat transfer from the first substrate 61 to the second substrate 62 or vice versa depends on the direction of the electric current applied, such that the temperature regulator 6 has the capacity for cooling the catalyst, and the amount of transferred heat depends on the magnitude of said electric current (it must be taken into account that the transfer limit is given by the temperature difference between the two substrates 61 and 62). Therefore, the heat flow between the substrates 61 and 62 is controlled by controlling the electric current. The first substrate 61 is associated with the regulation section 30 of the conduit 3, said regulation section 30 being integrated or arranged inside said first substrate 61, as shown by way of example in Figure 5, the inlet 30a of the regulation section 30 corresponding with the point where said regulation section 30 goes into the first substrate 61 and the outlet 30b of said regulation section 30 corresponding with the point where said regulation section 30 comes out of said first substrate 61. The first substrate 61 is preferably a metal substrate.

In the preferred embodiment, the other surface 62 of the thermoelectric module belongs to a metal sink or radiator 9 made of aluminum, for example, although it could belong to an additional, preferably metal, body that is connected to a radiator 9.

The first substrate 61 can comprise a dielectric layer arranged thereon, there being arranged on the dielectric layer a conductive paste (or conductive metal, such as copper, for example), the dies 63 are arranged thereon whereby said dies 63 are connected to the first substrate 61. The same occurs with the second substrate 62.

In the preferred embodiment, the installation is at least partially housed inside a cabinet 7, the thermoelectric module being inside and outside said cabinet 7: the first substrate 61 is inside the cabinet 7 whereas the second substrate 62 is outside the cabinet, as can be seen in Figure 5. In some environments, particularly in environments where work is performed at high temperatures, the thermoelectric module can lose effectiveness since it is adapted for transferring a specific amount of heat, and in these cases, it may not be sufficient for maintaining the catalyst at a desired temperature or below a desired temperature. In these cases, it is possible to cool the radiator 9 with cooling means to enable obtaining said desired temperature of the catalyst with the thermoelectric module. The radiator 9 is located outside the cabinet 7 and the cooling means can thus also be located outside the cabinet 7, which means that they do not have to comply with the ATEX standard, and that the user of the installation can therefore use the cooling means he considers most convenient, which facilitates this work and makes it less expensive.

The use of cooling means can furthermore be advantageous because the fact of not having that cooling system today makes the use of special and costly catalysts compulsory due to the low boiling point of some catalysts. As a result of using cooling means, this need is eliminated since the temperature of the catalyst can be maintained within a range of safety (below its boiling point), even if the temperature regulator 6 is not capable of performing it alone, whereby the cost of the hardening process is reduced.

To increase the performance of the thermoelectric module, in the preferred embodiment, the regulation section 30 of the conduit 3 describes at least one springlike trajectory around a longitudinal central axis 30c, the inlet 30a being located at one end of the spring-like trajectory. Spring-like trajectory must be interpreted as said regulation section 30 advancing longitudinally with respect to the central axis 30c as it surrounds said central axis 30c, describing concentric circles having one and the same specific radius with respect to said central axis 30c (although the radius could vary, and they may not even be concentric circles). In the embodiment, the regulation section 30 preferably comprises a first spring-like trajectory from the inlet 30a to the maximum length thereof in the longitudinal direction, with a first radius R1 with respect to the central axis 30c, and a second spring-like trajectory for receding the advancement of the first trajectory to the outlet 30b, with a second radius R2 with respect to the central axis 30c which preferably is less than the first radius R1, but which can be greater than said first radius R1 or even equal to said first radius R1. A larger surface of the conduit 3 is therefore in contact with the thermoelectric module (with the temperature regulator 6), a good performance being able to be obtained without the need of using a very long thermoelectric module. In another embodiment, the first substrate 61 can comprise a tubular shape with a central axis which is transverse to the central axis 30c mentioned above, the inlet 30a of the regulation section 30 being located at one end of the tube, transverse to the tube, and the outlet 30b of the regulation section 30 being located at the other end, transverse to the tube, and the regulation section 30 extending from its inlet 30a to its outlet 30b describing a spring-like trajectory around said longitudinal central axis with a specific radius.

In the preferred embodiment, the installation comprises measuring means 5 for controlling the amount of catalyst that is delivered to the molding tool 1, although in other embodiments, it may comprise another type of means. The measuring means 5 are arranged in the conduit 3 between the actuator 4 and the molding tool 1 for measuring the volume of catalyst that is delivered to the molding tool 1, the regulation section 30 being arranged between the tank 2 and the measuring means 5 such that the temperature regulator 6 is suitable for controlling the temperature of the catalyst at the inlet of the measuring means 5. The measuring means 5 are arranged inside the cabinet 7.

The detection means 5 can be volumetric detection means, in this case the weight of the catalyst that is delivered to the molding tool 1 can be quantified with the detection of the volume, the amount required for hardening a core can therefore be set. The measuring means 5 preferably correspond with a volumetric flowmeter which can be of the conventional type. The installation can further comprise a metering valve 8 for metering the way in which the catalyst coming from the measuring means 5 is supplied to the molding tool 1 that is arranged inside the cabinet 7.

In the preferred embodiment, the regulation section 30 is close to the inlet of the measuring means 5 to assure that the catalyst enters the measuring means 5 at a controlled temperature, such that the volume of the catalyst that enters and goes through the measuring means 5 is assured with precision, the amount of catalyst that is directed towards the molding tool 1 for hardening a core thus being easily controlled without the risk of making a mistake (amount going through the measuring means 5).

## Claims

1. Installation for hardening molding cores of a mass containing sand, wherein the core is subjected to at least one gas stream enriched with a catalyst for hardening it, the installation comprising a molding tool (1) where the core is subjected to the gas stream, a tank (2) where the catalyst is stored or an inlet for receiving a catalyst from the outside, a conduit (3) between the tank (2) or the inlet and the molding tool (1) through which the catalyst flows from said tank (2) or said inlet to said molding tool (1), and means for controlling the amount of catalyst that is delivered to the molding tool (1), **characterized in that** the installation further comprises a temperature regulator (6) which is associated with or coupled to the conduit (3) in a regulation section (30) and which is suitable for controlling the temperature of the catalyst that is delivered to the molding tool (1).

2. Installation according to claim 1, wherein the temperature regulator (6) acts on the outside of the regulation section (30) of the conduit (3), without contacting the catalyst.

3. Installation according to claim 2, wherein the temperature regulator (6) is electrically controlled, it being suitable for controlling the temperature of the catalyst by means of electric energy.

4. Installation according to claim 3, wherein the temperature regulator (6) corresponds with a thermoelectric module comprising a first substrate (61) associated with the regulation section (30) of the conduit (3), a second substrate (62) facing the first substrate (61) and exposed to a temperature different from the temperature to which the first substrate (61) is exposed, and a plurality of dies (63) arranged between both substrates (61, 62) and electrically connected in series to one another.

5. Installation according to claim 4, wherein the regulation section (30) is integrated or arranged inside the first substrate (61) of the thermoelectric module.

6. The installation according to claim 5, wherein the regulation section (30) describes a spring-like trajectory around a central axis (30c) inside the first substrate (61).

7. Installation according to claim 6, wherein the regulation section (30) describes, from an inlet (30a) of the regulation section (30) in the first substrate (61) to a specific maximum length of the central axis (30c), a first spring-like trajectory with respect to the central axis (30c) describing concentric circles having a first radius (R1) around said central axis (30c), and from the specific maximum length to an outlet (30b) of the regulation section (30) of the first substrate (61), a second spring-like trajectory with respect to the central axis (30c) describing concentric circles having a second radius (R2) around said central axis (30c), both radii (R1, R2) being different.

8. Installation according to claim 7, wherein the second radius (R2) is less than the first radius (R1).

9. Installation according to any of claims 4 to 8, wherein the first substrate (61) is a metal substrate.

10. Installation according to any of claims 4 to 9, wherein the second substrate (62) corresponds with a metal sink or radiator (9).

11. Installation according to any of claims 4 to 9, comprising a radiator (9) fixed to the surface of the second substrate (62) of the thermoelectric module opposite the surface of said second substrate (62) which is facing the first substrate (61).

12. Installation according to claim 10 or 11, comprising cooling means for cooling the radiator (9).

13. Installation according to any of claims 4 to 12, comprising an actuator (4) arranged in the conduit (3) for pumping the catalyst from the tank (2) or the inlet to the molding tool (1) and a cabinet (7) internally housing the molding tool (1), the tank (2) or the inlet where the catalyst is stored, the conduit (3) and the actuator (4), the temperature regulator being partially arranged inside said cabinet (7).

14. Installation according to claim 13, wherein the first substrate (61) of the temperature regulator (6) is arranged inside the cabinet (7) and the second substrate (62) is arranged outside said cabinet (7).

15. Installation according to any of the preceding claims, comprising measuring means (5) for controlling the amount of catalyst that is delivered to the molding tool (1), which are arranged in the conduit (3) between the actuator (4) and the molding tool (1) for measuring the volume of catalyst that is delivered to the molding tool (1), the regulation section (30) being arranged between the tank (2) or the inlet and the measuring means (5), such that the temperature regulator (6) is suitable for controlling the temperature of the catalyst at the inlet of the measuring means (5).
